Europäisches Patentamt

European Patent Office

Office européen des brevets

(19)

(11) **EP 0 761 801 A1**

(12) **DEMANDE DE BREVET EUROPEEN**

(43) Date de publication:
**12.03.1997 Bulletin 1997/11**

(51) Int Cl.⁶: **C10G 21/00**, B01D 11/04

(21) Numéro de dépôt: **96401807.1**

(22) Date de dépôt: **22.08.1996**

(84) Etats contractants désignés:
**AT BE CH DE DK ES FI FR GB GR IE IT LI LU MC NL PT SE**

(30) Priorité: **12.09.1995 FR 9510671**

(71) Demandeur: **TOTAL RAFFINAGE DISTRIBUTION S.A.**
**92800 Puteaux (FR)**

(72) Inventeurs:
• **Bracou, Hervé**
  **76600 Le Havre (FR)**

• **Gouzien, Luc**
  **76600 Le Havre (FR)**

(74) Mandataire: **Jolly, Jean-Pierre et al**
**Cabinet Jolly**
**54, rue de Clichy**
**75009 Paris (FR)**

Remarques:
Une requête en rectification de la description a été présentée conformément à la règle 88 CBE. Il est statué sur cette requête au cours de la procédure engagée devant la division d'examen (Directives relatives à l'examen pratiqué à l'OEB, A-V, 3.).

(54) **Procédé et dispositif d'extraction des composés aromatiques contenus dans une charge d'hydrocarbures**

(57) Dans ce procédé :

(a) la mise en contact intime à contre courant de la charge et du tiers solvant s'effectue au moins partiellement par l'intermédiaire d'au moins un élément de garnissage structuré (31) du type des mélangeurs statiques; et

(b) une partie au moins de la phase d'extrait riche en solvant et en composés aromatiques est séparée par séparation liquide-liquide (26) en une phase riche en solvant et sensiblement épuisée en raffinat, qui est évacuée, et en une phase riche en raffinat et appauvrie en solvant, qui est recyclée à l'extraction.

FIG. 2

## Description

La présente invention a pour objet un procédé amélioré et un dispositif amélioré d'extraction des composés aromatiques contenus dans une charge d'hydrocarbures par mise en contact de cette charge en phase liquide à contre-courant avec un tiers solvant liquide (extraction du type dit liquide-liquide).

L'invention s'intéresse plus particulièrement à l'extraction des composés aromatiques contenus dans les charges utilisées ensuite soit dans la composition d'huiles lubrifiantes, soit dans la composition de gazoles, et c'est dans cette application qu'elle sera décrite plus en détail ci-après, sans que ceci implique quelque limitation que ce soit de la portée de l'invention.

Les procédés d'extraction par mise en contact d'une charge à traiter, en phase liquide, et d'un tiers solvant circulant à contre-courant, également en phase liquide, est une opération bien connue dans la technique et elle vise à assurer le transfert d'un ou plusieurs solutés de la charge vers une phase non-miscible, le tiers solvant. On obtient ainsi deux phases: une phase d'extrait (solvant et soluté) et une phase de raffinat (charge débarrassée de la majeure partie du soluté).

Un tel procédé est utilisé, en particulier, pour l'élimination des composés aromatiques présents dans les charges utilisées dans la composition d'huiles lubrifiantes, car ces dernières doivent présenter de faibles variations de viscosité avec la température, alors que les composés aromatiques ont une viscosité très variable. De plus, les composés aromatiques sont sensibles à l'oxydation et peuvent conduire à la formation de coke par polycondensation.

On fait en général circuler le solvant et la charge à traiter à contre-courant dans une colonne d'extraction, le solvant, plus lourd que la charge, étant introduit dans la partie supérieure de la colonne, tandis que la charge est introduite dans la partie inférieure de celle-ci. On obtient, en tête, une phase de raffinat appauvrie en composés aromatiques provenant de la charge de départ ainsi que de faibles quantités de solvants et, en fond de colonne, une phase d'extrait contenant la majeure partie du solvant ainsi que des composés aromatiques dissous provenant de la charge de départ.

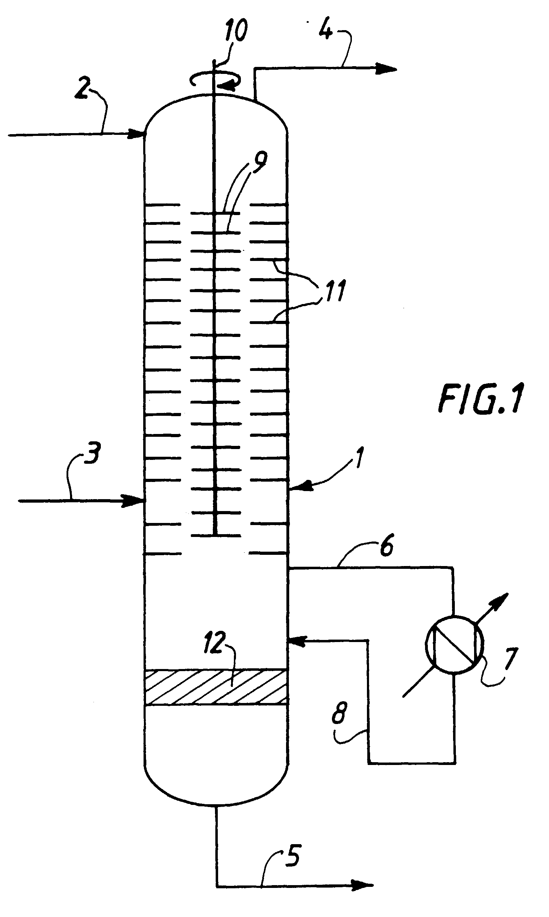

Pour plus de clarté, cette technique antérieure va être brièvement décrite ci-après, en référence à la figure 1 des dessins annexés, sur lesquels:

La figure 1 est un schéma d'une colonne de la technique antérieure pour l'extraction de composés aromatiques d'une charge utilisée ensuite dans la formulation d'huiles lubrifiantes ;
La figure 2 est une vue analogue d'une colonne d'extraction conforme à l'invention, qui sera décrite ci-après plus en détail.

Dans le cas de la colonne 1 d'extraction de la technique antérieure, représentée sur la figure 1, le solvant est introduit par la ligne 2 à la tête de la colonne, tandis que la charge à traiter est injectée dans la partie inférieure de celle-ci, à l'intérieur de la structure garnie, par la ligne 3, à une distance du fond sensiblement égale à un tiers de la hauteur de la colonne. En effet, le solvant a en général une masse spécifique supérieure à 1 kg/l et égale par exemple à 1,16 kg/l dans le cas du furfural, tandis que la charge a une masse spécifique inférieure ou égale, par exemple, à environ 0,92 kg/l pour un distillat sous vide. Le solvant constitue. la phase continue et la charge constitue la phase dispersée La séparation des phases se produit donc dans la partie supérieure de la colonne 1.

La phase de raffinat, servant de base lubrifiante, est récupérée en tête de colonne par la ligne 4, tandis que la phase d'extrait est évacuée en fond de colonne par la ligne 5. Le solvant contenu dans chaque phase est ensuite récupéré dans une étape de séparation puis recyclé vers l'unité d'extraction.

La sélectivité du solvant utilisé (furfural, N-méthyl pyrrolidone NMP, phénol, diméthyl sulfoxide DMSO, diméthyl formamide DMF, ou autres) est généralement insuffisante à la température ambiante, de sorte que l'opération d'extraction doit être réalisée à une température supérieure à la température ambiante, par exemple entre 80 et 140°C pour le furfural et 70 à 110°C pour la NMP.

A titre d'exemple, pour le furfural , la charge est généralement introduite à environ 85°C avec un débit spécifique de l'ordre de 4,5 à 8,5 $m^3/h/m^2$, tandis que le solvant -est introduit en tête de colonne à une température supérieure à celle de la charge et suffisante pour maintenir la tête de colonne au niveau requis pour la qualité du raffinat. Ce choix des températures est essentiel, puisque la miscibilité des deux phases croît avec la température. Ainsi, tout en maintenant une température élevée en tête de colonne pour améliorer la sélectivité et respecter les spécifications du raffinat, un premier gradient de température favorable au relargage de la phase légère contenue dans la phase continue est créé entre les deux zones d'introduction, ceci contribuant à accroître le rendement de l'extraction en $\frac{raffinat}{charge}$

Le débit spécifique du furfural est de l'ordre de 14,5 à 18,5 $m^3/h/m^2$, ce qui correspond à un taux de solvant ou ratio du débit de solvant sur le débit de charge, compris entre 1,70 et 4,10 $^v/_v$ et à un débit spécifique total (capacité hydraulique de l'extracteur) maximum de 23 $m^3/h/m^2$.

De plus, on opère également avec un gradient de température en fond de colonne. A cet effet, on prélève latéralement par la ligne 6 une partie de la phase continue, que l'on refroidit par passage dans un échangeur thermique 7 et que l'on recycle par la ligne 8 dans la partie inférieure de la colonne. On assure ainsi un second gradient de température plus important en fond de colonne, contribuant comme le premier gradient de température à un relargage de phase légère contenue dans la phase continue. Ainsi, la phase d'extrait est appauvrie en gouttes de phase de raffinat, ce qui contribue donc à l'augmentation du rapport $\frac{raffinat}{charge}$.

Pour les autres solvants, les conditions opératoires (débits spécifiques et températures) sont sélectionnées en fonction de leurs propriétés intrinsèques et de la qualité de raffinat souhaité.

En général, les charges utilisées dans la formulation d'huiles lubrifiantes contiennent de 50 à 75% de composés aromatiques et, après extraction, les raffinats obtenus contiennent de 35 à 55% d'aromatiques. Pour les charges utilisées dans la formulation de gazoles, leur teneur en aromatiques est de 25 à 35% et, après extraction, les raffinats obtenus contiennent de 10 à 20% d'aromatiques.

Dans la partie supérieure de la colonne, sur les deux tiers de la hauteur de celle-ci, sont prévus des internes constitués par des disques immobiles centrés axialement 9 et des couronnes 11 solidaires des parois latérales de la colonne.

Les internes de la colonne entretiennent la dispersion de la charge dans le tiers solvant. L'intensité du transfert de matière du ou des solutés de la charge vers le solvant est inversement proportionnelle à la taille des gouttes dispersées de la phase légère dans la phase continue. Afin donc de favoriser un transfert maximum de matière, on entretient la formation de petites gouttes.

Toutefois, les gouttes de petite taille posent des problèmes de coalescence, surtout avec des systèmes à faible tension interfaciale, et l'on risque d'entraîner avec la phase continue certaines gouttes de phase légère dispersée. De plus, ce risque est croissant avec les débits spécifiques du solvant et de la charge.

Pour remédier à cet inconvénient, on dispose généralement au-dessous de la ligne de recyclage 8 ce que l'on appelle dans la technique un matelas coalesceur 12, par exemple constitué d'un grillage enroulé, qui favorise les chocs entre gouttes et par conséquent leur coalescence, en limitant ainsi l'entraînement de la phase légère dispersée dans la phase continue.

Le temps de séjour de la phase continue dans la partie inférieure de la colonne 1, au-dessous du matelas coalesceur 12, est généralement supérieur à 15 minutes et de préférence compris entre 20 et 30 minutes, ce qui permet d'éliminer pratiquement toute la phase légère dispersée ayant pu traverser le matelas 12.

La technique décrite ci-dessus présente certains désavantages. Notamment, on observe des canaux axiaux de phases entre les plateaux et les disques; ce phénomène s'avère être encore plus marqué sur les colonnes de dimension importante et nuit à un transfert optimum des composés aromatiques vers le solvant. De plus, le mélange transversal entre les deux phases est relativement faible entre les plateaux et disques, ce qui porte atteinte également à un bon transfert de matière entre les deux phases.

Un autre dispositif semblable à celui décrit ci-dessus, mais dont les disques 9 sont rotatifs et entraînés par un arbre moteur disposé suivant l'axe de la colonne, a été proposé pour l'extraction des composés aromatiques contenus dans une charge d'hydrocarbures. L'action des disques rotatifs permet d'obtenir un meilleur mélange transversal que dans le cas précédent.

Toutefois, le mélange axial apparaît être trop important et préjudiciable pour un transfert optimum de matière d'une phase vers l'autre. Notamment, la formation de gouttes dispersées de très petite taille amène à diminuer le débit de la charge, ce qui limite la capacité de traitement de la colonne d'extraction.

De plus, ce dispositif à disques rotatifs est de construction complexe et s'avère difficile à mettre en oeuvre. En particulier, ce type de dispositif pose de sérieux problèmes de maintenance, notamment au niveau de l'entretien des paliers.

Un autre inconvénient rencontré dans les deux types de dispositifs réside dans une progression non homogène des phases à l'intérieur de la colonne d'extraction, ceci étant dû essentiellement à des effets de rétromélange (en anglais "back mixing"). En outre, la transparence axiale des internes du type des couronnes et disques est faible, de l'ordre de 25%, et limite donc la valeur du débit spécifique total.

La présente invention vise à remédier aux inconvénients cités ci-dessus en substituant, dans la partie supérieure de la colonne, des garnissages fixes de type mélangeurs statiques aux couronnes et disques immobiles ou rotatifs de la technique antérieure.

L'invention vise également à accroître la capacité de traitement des colonnes d'extraction en favorisant le contact intime entre le solvant et la charge, et la séparation des gouttes de la phase de raffinat dispersée en émulsion dans la phase d'extrait.

L'invention vise enfin à homogénéiser le temps de séjour de la charge dans la colonne d'extraction de façon telle que le temps de séjour de chaque goutte de la charge soit proche du temps de séjour moyen de l'ensemble des gouttes de la charge.

A cet effet, l'invention a pour objet un procédé d'extraction des composés aromatiques d'une charge d'hydrocarbures, par mise en contact intime à contre-courant de cette charge avec un tiers solvant liquide, non miscible avec la charge et apte à extraire les composés aromatiques, la séparation des phases conduisant à l'obtention d'une phase de raffinat appauvrie en composés aromatiques et d'une phase d'extrait riche en solvant et en composés aromatiques, ce procédé étant caractérisé en ce que (a) la mise en contact intime à contre-courant de la charge et du tiers solvant s'effectue au moins partiellement en présence d'au moins un élément de garnissage structuré du type des mélangeurs statiques, et (b) une partie au moins de la phase d'extrait riche en solvant et en composés aromatiques est séparée par séparation liquide-liquide en une phase riche en solvant et sensiblement épuisée en raffinat, qui est évacuée, et en une phase riche en raffinat et appauvrie en solvant, qui est recyclée à l'extraction.

Selon un mode préférentiel de l'invention, le débit du tiers solvant est supérieur à celui de la charge. Dans ce cas, le tiers solvant sert de phase continue, dans laquelle sont dispersées sous forme d'émulsion des gouttes de la charge.

L'invention a également pour objet un dispositif d'extraction des composés aromatiques d'une charge d'hydrocarbures, par mise en contact à contre-courant de cette charge avec un tiers solvant, non miscible avec la charge et apte à extraire les composés aromatiques, ce dispositif comprenant une colonne d'extraction, à la partie supérieure de laquelle est introduit le tiers solvant, tandis que la charge à traiter est introduite dans la partie inférieure de la colonne, une ligne d'évacuation de la phase de raffinat étant prévue à la partie supérieure de la colonne, tandis qu'une ligne d'évacuation de la phase d'extrait est prévue à la partie inférieure de la colonne, ce dispositif étant caractérisé en ce que,

(a) au moins un élément de garnissage structuré du type des mélangeurs statiques est logé dans une partie au moins du volume interne de la colonne séparant les niveaux d'introduction du solvant et de la charge; et

(b) la ligne d'évacuation de la phase d'extrait est reliée à un moyen de séparation liquide-liquide extérieur à la colonne, ce moyen de séparation étant équipé d'un moyen de sortie d'une phase riche en solvant et en composés aromatiques et appauvrie en raffinat, et d'un moyen de recyclage à la partie inférieure de la colonne d'une phase enrichie en raffinat et appauvrie en solvant.

Les mélangeurs statiques sont d'utilisation courante dans des colonnes de distillation et ils sont décrits, par exemple, dans US-A-4 532 086 et 2 577 820.

La demanderesse a établi, de façon surprenante, que de tels mélangeurs statiques, utilisés dans des colonnes d'extraction du type rappelé ci-dessus, favorisent de façon importante la turbulence du milieu et, par conséquent, la mise en contact intime de la phase continue de solvant et de la phase légère constituée par des charges employées, après extraction des aromatiques, dans la composition d'huiles lubrifiantes ou dans la composition de gazoles.

Dans les unités selon l'invention, le débit spécifique de la charge et celui du solvant sont nettement supérieurs à ceux autorisés pour une installation classique de même taille. Plus précisément, selon les essais effectués, le débit spécifique de la charge est 4 à 5 fois supérieur à celui d'une installation classique et le débit spécifique du solvant est 4 à 5 fois supérieur à celui d'une installation classique, ce qui correspond à un débit spécifique total pouvant aller jusqu'à 120 m³/h/m², selon la charge et le solvant.

Ceci se traduit par une très nette augmentation de capacité de traitement de l'unité d'extraction à isoqualité du raffinat obtenu. Les exemples 1 à 3 qui seront décrits ci-après illustrent parfaitement cette augmentation. En effet, l'unité de l'exemple 3 dont les couronnes et disques immobiles ont été remplacés par un volume spatial équivalent de mélangeurs statiques et à laquelle est reliée un décanteur externe, permet d'accroître la production de raffinat de 340% à isoconcentration en aromatiques et à isoqualité du raffinat obtenu dans une unité classique.

Une autre option est d'utiliser l'unité d'extraction selon l'invention à capacité égale à celle d'une unité de taille identique de l'art antérieur. Dans ce cas, la qualité du raffinat obtenu est supérieure à celle obtenue dans une unité classique.

Selon une forme de mise en oeuvre de l'invention, la séparation liquide-liquide est une décantation. Cette décantation peut être opérée à l'aide de différents types de décanteurs: par exemple, décanteurs gravitaires, décanteurs centrifuges mécaniques et hydrocyclones. De préférence, le décanteur utilisé pour la mise en oeuvre de l'invention est de type gravitaire, tel que ceux commercialisés par les sociétés Alfa-laval, Metaleurop et General Mills.

Selon une autre caractéristique de l'invention, les mélangeurs statiques sont constitués en matériau oléophobe tel que l'inox permettant une dispersion optimum de la phase légère dans la phase continue.

La colonne d'extraction selon l'invention pourra avantageusement comprendre à sa partie inférieure, comme dans la technique antérieure, une zone de coalescence constituée par un matelas coalesceur. Toutefois, pour une unité de l'art antérieur modifiée selon l'invention, si les débits de la charge et du solvant demeurent du même ordre que ceux de l'art antérieur, la coalescence des gouttes de phase de raffinat s'effectue sans la nécessité d'un matelas de coalescence. En effet, la taille des gouttes de la phase légère obtenues après passage dans les mélangeurs statiques est supérieure à celle obtenue dans le cas des dispositifs de l'art antérieur et donc leur coalescence est assurée spontanément dans la partie inférieure de la colonne. Le fonctionnement de l'unité s'en trouve avantageusement simplifié; en effet, la présence d'un matelas coalesceur, par exemple constitué d'un grillage enroulé, nécessite des travaux de maintenance occasionnés notamment par son obturation partielle par des particules solides contenues dans la charge et/ou des particules de coke formées par dégradation du solvant et/ou de la charge.

Selon une forme de réalisation particulièrement avantageuse de l'invention (voir exemple 3), la phase d'extrait est évacuée à la base de la colonne en direction d'un dispositif de décantation, où cette phase d'extrait se séparera en deux phases, une phase d'extrait proprement dite, qui est évacuée, et une phase enrichie en raffinat et pauvre en composés aromatiques et solvant, appelée pseudo-raffinat, qui est recyclée à la colonne d'extraction à un niveau inférieur à celui où la charge est introduite dans la colonne. De plus, le cas échéant, la phase d'extrait évacuée à la base de la colonne d'extraction et le pseudo-raffinat recyclé dans cette colonne peuvent être respectivement refroidie et chauffée par échange thermique, afin d'ajuster la température dans la gamme désirée dans la colonne d'extraction et dans le dispositif de décantation et donc créer un gradient de température facilitant le relargage de la phase légère contenue dans la phase continue.

Selon une autre variante de réalisation de l'invention, on disposera avantageusement à l'intérieur de la colonne d'extraction à laquelle est associé un moyen de séparation liquide-liquide, au moins un mélangeur statique, entre le niveau d'injection du pseudo-raffinat et le niveau d'injection de la charge. Ce mélangeur statique constitue un nouveau type de matelas coalesceur, toutefois sans les inconvénients de ceux de l'art antérieur.

Selon une caractéristique de l'invention, le mélangeur statique à cet endroit a une transparence axiale supérieure ou égale à ceux disposés entre les niveaux d'introduction de la charge et du solvant afin de bénéficier de conditions d'écoulement identiques en tous points de l'espace interne de la colonne d'extraction.

Selon une autre caractéristique, le matelas coalesceur sous la forme d'au moins un mélangeur statique est constitué d'un matériau oléophile tel que, par exemple, le polypropylène, le polytétrafluorure de carbone ou le polyéthylène, favorisant ainsi la coalescence des gouttes de phase de raffinat.

Les procédés et dispositifs conformes à l'invention dont diverses variantes ont été présentées ci-dessus offrent l'avantage d'accroître sensiblement la capacité de traitement de la colonne d'extraction ainsi que les rendements en $\frac{raffinat}{charge}$

On observe une nette diminution des risques d'entraînement des gouttes de phase de raffinat avec la phase d'extrait pour des systèmes à faible tension interfaciale, comme par exemple le couple furfural/distillat sous vide. De plus, les phénomènes de rétromélange sont minimisés, la formation de canaux axiaux de phases a disparu; tout cela au bénéfice d'un meilleur mélange transversal et axial des deux phases dans la zone des mélangeurs statiques. En outre, grâce à l'invention, on obtient des conditions de transfert plus uniformes de substances de la phase légère vers la phase continue.

On notera, en particulier, qu'il est possible, avec le dispositif conforme à l'invention, d'introduire la charge à traiter à une distance du fond de la colonne inférieure ou sensiblement égale à environ un quart de la hauteur de celle-ci, contre un tiers de cette hauteur pour les colonnes de la technique connue.

Enfin, il est clair que la maintenance d'une telle colonne d'extraction est beaucoup plus aisée que dans le cas particulier des colonnes à disques rotatifs de la technique antérieure.

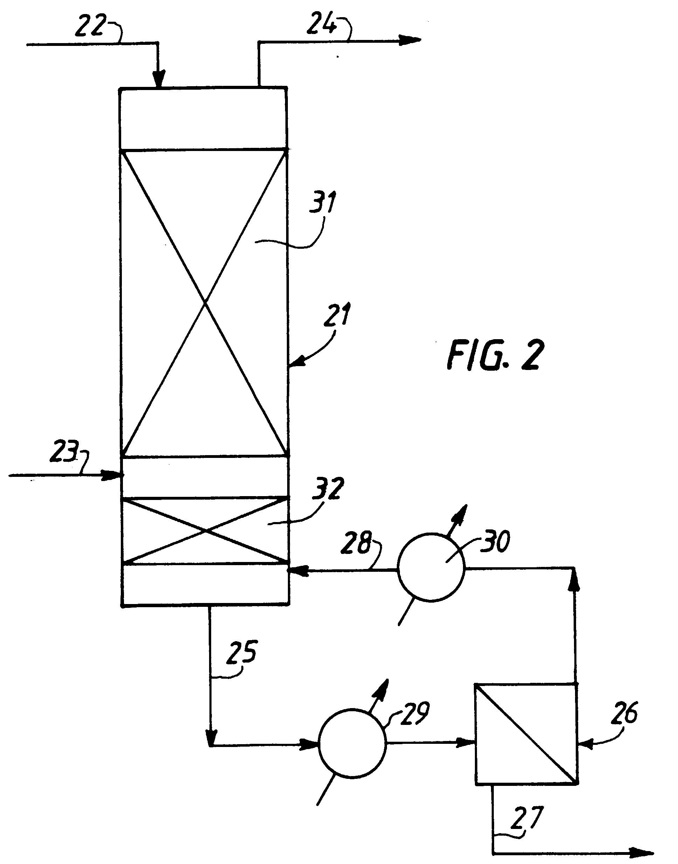

Une forme de réalisation du dispositif conforme à l'invention va maintenant être décrite plus en détail, en référence à la figure 2 des dessins annexés.

Sur cette figure, on retrouve une colonne d'extraction 21, comportant à sa partie supérieure une ligne d'alimentation 22 en solvant et, à environ un quart de la hauteur, à partir du fond, une ligne 23 d'alimentation en charge à traiter.

La phase de raffinat est évacuée en tête de colonne par une ligne 24, tandis que la phase d'extrait est évacuée en pied de colonne par une ligne 25. Conformément à l'invention, une partie au moins du volume interne de la colonne 21, située entre les niveaux d'injection du solvant et de la charge, contient des éléments de garnissage 31 constitués par des mélangeurs statiques, par exemple ceux commercialisés sous l'appellation SMV par la Société Sulzer ou ceux commercialisés par Kenics et Alfa-Laval.

Ces éléments de garnissage ont pour effet de favoriser la mise en contact des deux phases et par conséquent le transfert de matière. De plus, leur transparence axiale est très élevée, par exemple de l'ordre de 90% pour les mélangeurs statiques SMV de SULZER, contribuant ainsi à accroître les débits spécifiques de charge et de solvant.

Afin de restreindre le volume de la colonne 21 situé au-dessous du niveau d'injection de la charge, volume qui est habituellement limité à sa partie supérieure par un matelas coalesceur et qui est destiné à permettre aux gouttes de la phase légère dispersée de coalescer, on préfère, dans la forme de réalisation illustrée par la figure 2, évacuer la phase d'extrait en fond de colonne en direction d'un système extérieur de décantation. Cette phase d'extrait est ainsi acheminée par la ligne 25 vers un décanteur 26, dans laquelle elle séjourne suffisamment longtemps, par exemple pendant au moins 20 minutes, pour permettre la séparation d'une phase d'extrait sensiblement épuisée en raffinat, qui est évacuée par la ligne 27 en direction d'un circuit de récupération du solvant, et une phase riche en raffinat et appauvrie en solvant, ou pseudo-raffinat, qui est réinjectée à la base de la colonne 21 par la ligne 28.

Sur les lignes 25 et/ou 28 sont prévus des échangeurs thermiques, respectivement 29 et 30, qui permettent d'abaisser la température de la phase d'extrait en sortie de colonne et d'augmenter la température de la phase de pseudo-raffinat recyclée dans la colonne. La température dans le décanteur 26 peut être de l'ordre de 50 °C.

Entre les niveaux d'injection de la phase de pseudo-raffinat (28) et de la charge (23), des éléments de garnissage 32 du type des mélangeurs statiques pourront également être logés dans la colonne, afin d'optimiser au maximum la coalescence des gouttes de phase de raffinat non regroupées éventuellement dans la phase de pseudo-raffinat lors de la décantation externe.

**EXEMPLES**

Les exemples ci-après, qui n'ont pas de caractère limitatif, sont destinés à illustrer la mise en oeuvre de l'invention et les avantages de celle-ci.

## Exemple 1

On traite dans une colonne d'extraction au furfural un distillat sous vide dont les viscosités à 40°C et 100°C sont respectivement de 32,8 centistokes et 5,15 centistokes (mm²/s) et la masse volumique à 15°C de 0,915 kg/l. La teneur en aromatiques de ce distillat est de 57%.

La colonne utilisée, d'une hauteur de 19 mètres et d'un diamètre de 2,4 mètres, comporte dans sa zone supérieure sur une hauteur de 8,4 m des disques centrés immobiles d'un diamètre de 1,2 m entre des couronnes d'un diamètre annulaire de 1,7 m attenantes aux parois latérales. Les disques et couronnes sont régulièrement espacés avec un écartement entre un disque et une couronne de 0,15 m.

La charge est introduite dans la colonne à une distance du fond égale à 8,9 m, à une température d'environ 85°C avec un débit spécifique égal à 8,5 m³/h/m², tandis que le furfural, est introduit en tête de colonne à une température suffisante pour maintenir 100°C au sommet de la colonne d'extraction.

Le débit spécifique du solvant est de l'ordre de 14,5 m³/h/m², correspondant à un rapport du débit de solvant sur le débit de charge (taux de solvant), de 1,70 $^v/_v$ et à un débit spécifique total (capacité hydraulique de l'extracteur) de 23 m³/h/m².

Au dessous des disques et couronnes, une partie de la phase descendante est prélevée avec un rapport débit prélevé sur débit de solvant de 1 $^v/_v$. Cette phase prélevée est refroidie par échange thermique à environ 45°C à l'extérieur de la colonne, puis réinjectée juste sous le niveau de prélèvement à environ 5,3 m du fond, créant ainsi un gradient de température de 40°C entre l'alimentation de la charge et le fond de la colonne.

Pour optimiser l'appauvrissement de la phase d'extrait en gouttes de phase de raffinat dans la zone inférieure de la colonne, un matelas de coalescence constitué par un enroulement de fils métalliques sur une hauteur de 60 cm, est disposé à 4,3 m du fond de ladite colonne et suivant toute la section de la colonne (augmentation de la taille des gouttes de phase de raffinat.)

La phase de raffinat est récupérée en tête de colonne et la phase d'extrait est évacuée en fond de colonne.

Dans les conditions précédemment décrites, l'extraction conduit à un rendement en $\frac{raffinat}{charge}$ de 61% poids soit une production de 515 t/j de raffinat conforme à une viscosité de 30 centistokes à 40°C et à un indice de viscosité de 95. La teneur en aromatiques du raffinat obtenu est de 35,5%.

## Exemple 2

On traite la même charge que dans l'exemple 1 dans une colonne comportant des mélangeurs statiques de type SMV commercialisés par la société SULZER. Les mélangeurs statiques occupent une position et un espace identiques à ceux occupés par les disques et couronnes de l'exemple 1. De même, la position et la structure du matelas de coalescence sont analogues à celles du matelas de l'exemple 1.

Les conditions de températures et les positions d'introduction, de prélèvement, de réinjection et de sorties de la phase de raffinat et de la phase d'extrait sont également identiques à ceux utilisés dans l'exemple 1.

La charge est introduite avec un débit spécifique égal à 30 m³/h/m² tandis que le furfural est introduit avec un débit spécifique de 51 m³/h/m², correspondant à un rapport du débit de solvant sur le débit de charge (taux de solvant) de 1,70 $^v/_v$ et à un débit spécifique total de 81 m³/h/m².

La phase de raffinat est récupérée en tête de colonne et la phase d'extrait est évacuée en fond de colonne.

L'extraction conduit à un rendement $\frac{raffinat}{charge}$ de 51% à concentration sensiblement identique en aromatiques et à isoqualité de celui obtenu dans l'exemple 1 soit une production de 1520 tonnes par jour, ce qui correspond à une augmentation de production de 195%.

## Exemple 3

On traite la même charge que dans l'exemple 1 par un procédé et dispositif conformes à l'invention.

On utilise la même colonne de 19 m de hauteur et 2,4 m de diamètre, garnie sur une hauteur de 17 m par des mélangeurs statiques de type SMV commercialisés par la société SULZER.

La charge est introduite à une distance de 4 m par rapport au fond de la colonne, à une température d'environ 100°C et avec un débit spécifique de 35 m³/h/m². Le solvant est introduit en tête de colonne avec un débit spécifique de 46 m³/h/m², soit un rapport solvant sur charge de 1,31 $^v/_v$ et un débit spécifique total de 81 m³/h/m². La température du solvant est d'environ 100°C au sommet de la colonne et est maintenue à cette valeur jusqu'au niveau du point d'alimentation de la charge (conditions isothermes).

Le mélange diphasique, obtenu après passage de la charge dans les mélangeurs statiques à contre courant du solvant, est soutiré en fond de colonne, puis est traité dans un décanteur externe à la colonne à une température d'environ 50°C, régulée par échange thermique, et avec un temps de séjour dans le décanteur de l'ordre de 20 minutes.

La phase d'extrait ainsi épuisée en raffinat est soutirée du décanteur et dirigée vers un circuit de récupération du solvant. La phase légère appelée pseudo-raffinat est réintroduite à la base de la colonne à une température d'environ 85°C assurant un faible gradient (15°C) entre le point d'alimentation de charge et le fond de la colonne.

La phase de raffinat est récupérée en tête de colonne.

Ce procédé d'extraction permet d'obtenir un rende-

ment $\frac{raffinat}{charge}$ d'environ 65 % soit une production de 2260 t/j de raffinat à concentration en aromatiques sensiblement identique et à isoqualité du raffinat obtenu dans l'exemple 1. Ceci correspond à une augmentation de 340% de la production en raffinat par rapport à celle obtenue selon la technique antérieure décrite à l'exemple 1 et, à une augmentation de 50% de la production en raffinat par rapport à celle obtenue selon l'exemple 2.

L'exemple 3 illustre les améliorations apportées à la technique d'extraction des composés aromatiques des charges d'hydrocarbures; le rendement ainsi que la production en raffinat sont très nettement augmentés sans nuire à la qualité des produits. De plus, le dispositif et le procédé selon l'invention utilisent des quantités de solvant moins importants pour traiter la charge; ce qui se traduit par un ratio $\frac{solvant}{charge}$ inférieur de 20 à 35% (de l'ordre 23 % pour l'exemple 3) par rapport à celui de la technique antérieure, permettant donc des économies substantielles sur la mise en oeuvre du procédé d'extraction, notamment sur la quantité de solvant nécessaire au fonctionnement de l'unité d'extraction.

On notera que le procédé et le dispositif conformes à l'invention n'est pas limité à l'extraction des composés aromatiques d'une charge d'hydrocarbures, mais qu'ils puissent être utilisés également pour l'extraction d'autres types d'impuretés hydrocarbonées.

## Revendications

1. Procédé d'extraction des composés aromatiques d'une charge d'hydrocarbures, par mise en contact intime à contre-courant de cette charge avec un tiers solvant liquide, non miscible avec la charge et apte à extraire les composés aromatiques, la séparation des phases conduisant à l'obtention d'une phase de raffinat appauvrie en composés aromatiques et d'une phase d'extrait riche en solvant et en composés aromatiques, ce procédé étant caractérisé en ce que

    (a) la mise en contact intime à contre courant de la charge et du tiers solvant s'effectue au moins partiellement par l'intermédiaire d'au moins un élément de garnissage structuré (31) du type des mélangeurs statiques; et
    (b) une partie au moins de la phase d'extrait riche en solvant et en composés aromatiques est séparée par séparation liquide-liquide (26) en une phase riche en solvant et sensiblement épuisée en raffinat, qui est évacuée, et en une phase riche en raffinat et appauvrie en solvant, qui est recyclée à l'extraction.

2. Procédé selon la revendication 1, caractérisé en ce que le tiers solvant sert de phase continue, dans laquelle sont dispersées sous forme d'émulsion des gouttes de la charge.

3. Procédé selon la revendication 1 ou 2, caractérisé en ce que la séparation liquide-liquide s'effectue par décantation.

4. Procédé selon l'une des revendications 1, 2 et 3, caractérisé en ce que la phase riche en raffinat est refroidie par échange thermique avant d'être recyclée à l'extraction.

5. Procédé selon la revendication 1, caractérisé en ce que le tiers solvant est du furfural.

6. Dispositif d'extraction des composés aromatiques d'une charge d'hydrocarbures, par mise en contact à contre-courant de cette charge avec un tiers solvant, non miscible avec la charge et apte à extraire les composés aromatiques, ce dispositif comprenant une colonne d'extraction (21), à la partie supérieure de laquelle est introduit le tiers solvant, tandis que la charge à traiter est introduite dans la partie inférieure de la colonne, une ligne (24) d'évacuation de la phase de raffinat étant prévue à la partie supérieure de la colonne (21), tandis qu'une ligne (25) d'évacuation de la phase d'extrait est prévue à la partie inférieure de la colonne, ce dispositif étant caractérisé en ce que,

    (a) au moins un élément de garnissage structuré (31) du type des mélangeurs statiques est logé dans une partie au moins du volume interne de la colonne (21) séparant les niveaux (22, 23) d'introduction du solvant et de la charge; et
    (b) la ligne (25) d'évacuation de la phase d'extrait est reliée à un moyen de séparation liquide-liquide (26) extérieur à la colonne (21), ce moyen de séparation (26) étant équipé d'un moyen de sortie (27) d'une phase riche en solvant et en composés aromatiques et appauvrie en raffinat, et d'un moyen (28) de recyclage à la partie inférieure de la colonne d'une phase enrichie en raffinat et appauvrie en solvant.

7. Dispositif selon la revendication 6, caractérisé en ce que l'élément de garnissage structuré (31) est en matériau oléophobe.

8. Dispositif selon la revendication 6, caractérisé en ce que le moyen de séparation liquide-liquide est un décanteur, de préférence de type gravitaire.

9. Dispositif selon l'une des revendications 6 à 8, caractérisé en ce que, de façon connue en soi, la ligne d'évacuation (25) de la phase d'extrait comporte un moyen de refroidissement par échange thermique de cette phase d'extrait.

**10.** Dispositif selon l'une des revendications 6 à 9, caractérisé en ce que, de façon connue en soi, le moyen (28) de recyclage à la partie inférieure de la colonne comporte un moyen de chauffage par échange thermique de la phase enrichie en raffinat et appauvrie en solvant.

**11.** Dispositif selon la revendication 6, caractérisé en ce que, de façon connue en soi, un matelas coalesceur est disposé à l'intérieur de la colonne (21), entre le niveau (28) de recyclage de la phase riche en raffinat en provenance du système de décantation (26) et le niveau (23) d'introduction de la charge à traiter.

**12.** Dispositif selon la revendication 10, caractérisé en ce que le matelas coalesceur est constitué par au moins un élément de garnissage (32) du type des mélangeurs statiques, de préférence en matériau oléophile.

**13.** Dispositif selon l'une des revendications 6 à 12, caractérisé en ce que la charge à traiter est introduite dans la colonne d'extraction (21) à une distance du fond de celle-ci inférieure ou sensiblement égale à environ un quart de la hauteur de cette colonne.

**14.** Utilisation d'un procédé selon l'une des revendications 1 à 5 ou d'un dispositif selon l'une des revendications 6 à 13 pour l'extraction des composés aromatiques d'une charge utilisée après la dite extraction dans la formulation d'huiles lubrifiantes.

FIG.1

22    24

31

21

*FIG. 2*

23

32

28    30

25

29    26

27

| | Office européen des brevets | **RAPPORT DE RECHERCHE EUROPEENNE** | Numero de la demande EP 96 40 1807 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | FR-A-2 315 300 (METALLGESELLSCHAFT) * page 8, ligne 29 - page 9, ligne 23; revendications 1-7; figure 6 * --- | 1-10 | C10G21/00 B01D11/04 |
| Y | US-A-3 979 281 (UOP) * le document en entier * --- | 1-10 | |
| A | FR-A-2 577 820 (WIEDERAUFARBEITUNGSANLAGE KARLSRUHE BETRIEBSGESELLSCHAFT) --- | | |
| A | DE-U-85 29 714 (BAYER) --- | | |
| A | FR-A-2 190 510 (IFP) --- | | |
| A | US-A-4 336 106 (UOP) ----- | | |

**DOMAINES TECHNIQUES RECHERCHES (Int.Cl.6)**

B01D
C10G

Le présent rapport a été établi pour toutes les revendications

| Lieu de la recherche | Date d'achèvement de la recherche | Examinateur |
|---|---|---|
| LA HAYE | 4 Octobre 1996 | Michiels, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)